# EUROPÄISCHE PATENTSCHRIFT

(11) **EP 0 731 937 B1**
(45) Veröffentlichungstag und Bekanntmachung des Hinweises auf die Patenterteilung: **22.07.1998**
(21) Anmeldenummer: 95900669.3
(22) Anmeldetag: 04.11.1994
(51) Int. Cl.: G05B 19/042, B60T 8/88

(54) **SCHALTUNGSANORDNUNG FÜR SICHERHEITSKRITISCHE REGELUNGSSYSTEME**
CIRCUIT FOR SAFETY-CRITICAL CONTROL SYSTEMS
CIRCUIT POUR SYSTEME DE REGLAGE A SECURITE CRITIQUE

(30) Priorität: 02.12.1993 DE 4341082
(43) Veröffentlichungstag der Anmeldung: 18.09.1996
(73) Patentinhaber: ITT Automotive Europe GmbH, 60488 Frankfurt am Main (DE)
(72) Erfinder: GIERS, Bernhard, D-64380 Rossdorf (DE)
(74) Vertreter: Blum, Klaus-Dieter, Dipl.-Ing.
(86) Internationale Anmeldenummer: EP9403623
(87) Internationale Veröffentlichungsnummer: WO9515518

(56) Entgegenhaltungen:
- EP-A- 0 201 356
- EP-A- 0 348 240
- EP-A- 0 496 509
- US-A- 3 579 200
- US-A- 4 277 844

## Beschreibung

Die Erfindung bezieht sich auf eine Schaltungsanordnung, die für sicherheitskritische Regelungssysteme vorgesehen ist und ein Mikroprozessorsystem umfaßt, das zwei oder mehrere Zentraleinheiten bzw. CPU's enthält und mit dem durch Datenverarbeitung, die zumindest teilweise redundant ausgelegt ist, die Eingangsdaten ausgewertet und Regelsignale erzeugt werden, wobei die Eingangsdaten parallel verarbeitet werden, Ergebnisse der parallelen, redundanten Datenverarbeitung verglichen und bei Nichtübereinstimmung Signale zur Fehlererkennung bzw. Abschaltung und Sperrung des Regelungssystems gewonnen werden.

Eine solche Schaltungsanordnung ist aus der EP-A-0 496 509 bekannt, die ebenso wie die Erfindung zur Regelung und Steuerung eines Kraftfahrzeug-Antiblockiersystems vorgesehen ist. Hierzu werden die mit Hilfe von Radsensoren gewonnenen Informationen in zwei Mikroprozessoren parallel verarbeitet, und es werden die Datenverarbeitungsergebnisse der beiden Mikroprozessoren mit Hilfe eines weiteren Mikroprozessors korreliert, um bei voneinander abweichenden Ergebnissen ein Fehlererkennungssignal zu gewinnen. Im Fehlerfall wird die Antiblockierregelung abgeschaltet, um zu gewährleisten, daß zumindest die konventionelle Bremsenfunktion erhalten bleibt.

Ein weiteres Beispiel für eine Schaltungsanordnung dieser Art, die ebenfalls zur Steuerung und Überwachung einer blokkiergeschützten Fahrzeugbremsanlage dient, ist aus der Patentschrift DE 32 34 637 C2 bekannt. Nach dieser Schrift werden ebenfalls die Radsensorsignale zwei identisch programmierten Mikrocomputern parallel zugeführt und dort synchron verarbeitet. Die Ausgangssignale (und Zwischensignale) der beiden Mikrocomputer werden auf Übereinstimmung überwacht, um ein Fehlererkennungssignal zu erzeugen. Bei dieser bekannten Schaltung dient einer der beiden Mikrocomputer zur Erzeugung der Bremsdrucksteuersignale, der andere zur Bildung der Prüfsignale. Folglich ist nach diesem Konzept eigens zum Zweck der Erkennung eines Datenverarbeitungsfehlers ein zweiter Mikrocomputer, der in seinem Aufbau und seiner Programmierung mit dem ersten Mikrocomputer identisch ist, erforderlich.

Nach einer anderen bekannten, in der Offenlegungsschrift DE 41 37 124 A1 beschriebenen Schaltungsanordnung werden die Eingangsdaten wiederum zwei Mikrocomputern zugeführt, von denen jedoch nur einer die vollständige, aufwendige Signalverarbeitung ausführt. Der zweite Microcomputer dient vornehmlich zur Überwachung, weshalb die Eingangssignale nach Aufbereitung und Bildung von zeitlichen Ableitungen mit Hilfe vereinfachter Regelalgorithmen und vereinfachter Regelphilosophie weiter verarbeitet werden. Die vereinfachte Verarbeitung reicht zur Erzeugung von Signalen aus, die durch Vergleich mit den in dem aufwendigeren Mikrocomputer verarbeiteten Signale Rückschlüsse auf den ordnungsgemäßen Betrieb zulassen. Durch diese Verwendung eines Prüf-Mikrocomputers geringerer Leistungsfähigkeit läßt sich zwar der Herstellungsaufwand im Vergleich zu einem System mit zwei Mikrocomputern gleicher Leistung reduzieren, doch ist immer noch der für die Fehlererkennung erforderliche Aufwand erheblich.

Ferner ist es bereits bekannt, z.B. aus der US-A-4 277 844,einen Speicherplatz mit einer Prüfinformation zu belegen und den Inhalt des Speicherplatzes mit einer zugehörigen Prüfinformation zu vergleichen.

Aus der EP 0 348 240 A ist ein Ein-Chip-Mikroprozesson bekannt, der mit einer auf demselben Chip untergebrachten Paritätsüberprüfung ausgerüstet ist. Die zur Paritätsprüfung benötigte Redundazinformation wird in einem externen Speicher aufbewahrt.

Der Erfindung liegt nun die Aufgabe zugrunde, eine Schaltungsanordnung der eingangs genannten Art zu entwickeln, die sich gegenüber den vorgenannten bekannten Schaltungen durch verringerten Herstellungsaufwand auszeichnet und die dennoch mit hoher Sicherheit Fehler in der Datenverarbeitung erkennt und signalisiert.

Es hat sich gezeigt, daß diese Aufgabe durch die im Anspruch 1 beschriebene Schaltungsanordnung gelöst werden kann, deren Besonderheit darin besteht daß die Zentraleinheiten bzw. CPU's mit gemeinsamen Schreib-/Lesespeichern, denen jeweils ein Generator zur Erzeugung einer Prüfinformation zugeordnet ist, und mit gemeinsamen Festwertspeichern ausgerüstet sind, wobei die Schreib-/Lesespeicher sowie die Festwertspeicher durch Speicherplätze für die Prüfinformation erweitert sind, daß Ausgangsdaten einer CPU, nämlich zumindest die Rechenergebnisse bzw. "Daten", mit den entsprechenden Ausgangsdaten der zweiten bzw. der anderen CPU's zur Fehlererkennung verglichen werden,und daß bei jedem schreibenden oder lesenden Zugriff zu den Speichern der Inhalt des Speicherplatzes mit der generierten, zugeführten, Prüfinformation verglichen bzw. korreliert und ein Fehlererkennungssignal erzeugt wird, wenn Übereinstimmung oder "Plausibilität" nicht gegeben ist.

Erfindungsgemäß wird also die geforderte hohe Sicherheit der Erkennung von Datenverarbeitungsfehlern trotz Verzicht auf einen zweiten, die Eingangssignale redundant verarbeitenden Mikrocomputer erreicht. Es genügt ein neuartiges Mikroprozessorsystem, das sich von herkömmlichen Schaltkreisen dieser Art oder Mikrocontrollern vor allem durch die Ausrüstung mit zwei (oder mehreren) CPU's und durch die redundante Verarbeitung der Eingangsdaten mit Hilfe dieser beiden CPU's sowie durch relativ geringfügige Erweiterung der Speicher durch Speicherplätze für Prüfinformationen, durch zusätzliche, z.B. aus einigen Exklusiv-ODER-Gattern bestehende Generatoren zur Erzeugung der Prüf- oder Redundanzinformation und durch einige zusätzliche Vergleicher unterscheidet.

Die Erweiterung der Speicher durch Plätze für die Prüf- bzw. Redundanzinformationen beschränkt sich - je nach geforderter Redundanz - auf einige Prozent, z.B. 5 bis 20%, des für den Speicher erforderlichen Platzes. Die Verwendung von zwei vollständigen CPU's fällt im Vergleich zu dem Aufwand für das gesamte Mikroprozessorsystem nur wenig ins Gewicht. Der Herstellungsaufwand für das erfindungsgemäße Mikroprozessorsystem, das vorzugsweise auf einem Chip untergebracht wird, ist folglich nur wenig höher als für ein vergleichbares Chip bekannter Art. Die Beschränkung auf nur ein Mikroprozessorsystem im Vergleich zu entsprechenden Schaltungen bekannter Art, die zwei Prozessoren besitzen, führt also zu erheblichen Einsparungen.

Einige vorteilhafte Ausführungsarten der erfindungsgemäßen Schaltungsanordnung sind in den Unteransprüchen beschrieben.

Ein Ausführungsbeispiel der Erfindung besteht darin, daß die Prüfinformation in Form von Redundanzinformation vorliegt. Zweckmäßig ist es, zur Bildung der Prüf- bzw. Redundanzinformation die gerade oder ungerade Parität der Bits der einzelnen Daten zu ermitteln. Es kann jedoch auch die Quersumme der gespeicherten oder übertragenen Daten oder einer Redundanzinformation auf Basis eines vorgegebenen Polynoms gebildet werden.

Nach einer weiteren vorteilhaften Ausführungsart der Erfindung werden zur Erzeugung der Prüf- bzw. Redundanzinformation die gespeicherten und/oder die übertragenen Daten durch ein Paritätsbit erweitert. Der zusätzliche Speicherplatzbedarf für dieses Prüfbit fällt kaum ins Gewicht.

Das Fehlererkennungssignal führt nach einem weiteren Ausführungsbeispiel der Erfindung zur Abschaltung oder zur Sperrung des Mikroprozessorsystems. Bei Verwendung der erfindungsgemäßen Schaltungsanordnung zur Blockierschutzregelung wird durch Abschaltung des Mikroprozessorsystems die Regelung beendet und die konventionelle Bremsenfunktion, d.h. die Bremsenfunktion ohne Regelung, sichergestellt.

Eine Weiterbildung der erfindungsgemäßen Schaltungsanordnung besteht darin, daß zur Erhöhung der Redundanz nicht nur die CPU's, sondern noch weitere ausgewählte Komponenten des Mikroprozessorsystems, wie Speicher, Eingabe-Ausgabe-Einheiten usw., zweifach in diesem 1-Chip-Mikroprozessorsystem vorhanden sind.

Ein sicherheitskritisches Regelungssystem, für das sich die erfindungsgemäße Schaltungsanordnung besonders eignet, ist eine Kraftfahrzeug-Bremsanlage mit Blockierschutzund/oder Antriebsschlupfregelung. In diesem Fall werden die Sensorsignale, die das Drehverhalten der Räder und/oder das Fahrverhalten des Fahrzeugs wiedergeben, mit dieser Schaltungsanordnung verarbeitet und zur Erzeugung von Bremsdruck-Steuersignalen ausgewertet.

Weitere Merkmale, Vorteile und Anwendungsmöglichkeiten der Erfindung gehen aus der folgenden Beschreibung spezieller Ausführungsbeispiele anhand der beigefügten Abbildungen hervor.

Es zeigen in Prinzipdarstellung als Blockschaltbild und in Teildarstellung
- Fig. 1: das Zusammenwirken der Zentraleinheiten (CPU's), der zugehörigen Vergleicher und der Abschaltfunktion eines Mikroprozessorsystems nach der Erfindung,
- Fig. 2: in gleicher Darstellungsweise wie Fig. 1 einen Festwertspeicher (ROM) und die zugehörigen Prüf-Komponenten,
- Fig. 3: in gleicher Darstellungsweise wie Fig. 2 einen Schreib-/Lesespeicher und die zugehörigen Prüf-Komponenten,
- Fig. 4: in gleicher Darstellungsweise den Anschluß von Eingabe- oder Ausgabeeinheiten und
- Fig. 5: in gleicher Darstellungsweise wie die vorangegangenen Figuren die Zusammenschaltung der wesentlichen Komponenten eines Mikroprozessorsystems nach der Erfindung.

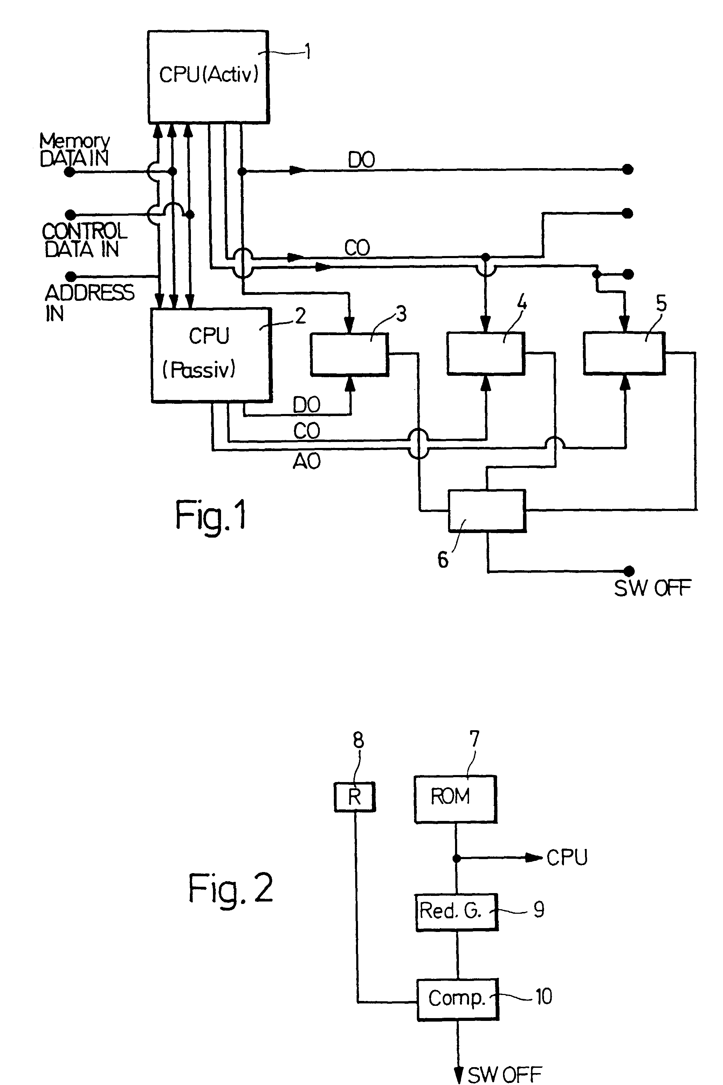

Fig. 1 veranschaulicht, daß das erfindungsgemäße Mikroprozessorsystem zwei Zentraleinheiten 1,2, CPU's genannt, aufweist, denen über Bus-Systeme, nämlich einen Datenbus Memory DATA IN, einen Steuerbus CONTROL DATA IN und einen Adreßbus ADDRESS IN die Eingangssignale bzw. Eingangsdaten parallel zugeführt werden. Die CPU 1 wird als "aktiv" bezeichnet, weil ihre Ausgangsdaten über die Bus-Systeme D OUT,C OUT,A OUT zur Weiterverarbeitung weitergeleitet werden. Die CPU 2 ist dagegen "passiv", weil sie lediglich zu Prüfzwecken vorhanden ist. Da beide CPU's 1,2 in dem vorliegenden Beispiel identisch aufgebaut und programmiert sind, lassen sich durch Vergleich der Ausgangsdaten beider Einheiten 1,2 Datenverarbeitungsfehler erkennen. Die Ausgangsdaten der beiden CPU's werden daher mit Hilfe von Vergleichern 3,4,5 auf Übereinstimmung verglichen; dem Datenbus, dem Steuerbus und dem Adreßbus sind jeweils ein eigener Vergleicher 3 bzw. 4 und 5 zugeordnet. Stimmen die Daten nicht überein, wird dies als Datenverarbeitungsfehler bewertet und über ein Gatter 6 ein Abschalt- oder Sperrsignal ausgegeben.

In Bezug auf die Datenverarbeitung in den CPU's 1,2 ist also bei dem erfindungsgemäßen Mikroprozessorsystem 100%ige Redundanz gegeben. Die Prüfung und Überwachung der Speicher beruht auf einem anderen Prinzip. Wie Fig. 2 zeigt, ist einem Festwertspeicher (ROM) 7 ein weiterer Speicher 8 für Redundanzinformationen zugeordnet. In der Praxis wird der Festwertspeicher 7 zur Aufnahme dieser Redundanzinformationen um die entsprechenden Speicherplätze erweitert.

Die aus dem Speicher 7 ausgelesenen Daten werden einem Prüf- oder Redundanz-Generator 9 zugeführt, der Logikschaltungen zur Erzeugung der Prüf-Informationen enthält. Die mit Hilfe des Generators 9 gewonnenen Prüfinformationen müssen mit den im Speicher 8 enthaltenen Informationen übereinstimmen. Trifft dies nicht zu, wird von einem Vergleicher 10 ein Abschalt- oder Sperrsignal erzeugt.

Liegt die Prüfinformation in Form eines Paritätsbits vor, besteht der Generator 9 zur Bildung dieser Prüf- bzw. Redundanzinformation z.B. aus der erforderlichen Anzahl von Exklusiv-ODER-Gattern zur Feststellung der Parität. Auf diese Weise kann jeder Einfach-Fehler erkannt werden; natürlich lassen sich durch Prüf-Informationen auf Basis von zwei oder mehreren Bits auch gleichzeitige Mehrfachfehler erkennen. Die Bildung von Redundanz-Information auf Basis von Polynomen und bestimmten Algorithmen kann ebenfalls zweckmäßig sein.

Für das Lesen von Informationen aus einem Schreib-/Lesespeicher (RAM) gelten die Erläuterungen anhand der Fig. 2 analog. Auch dieser Schreib-/Lesespeicher wird erfindungsgemäß durch einige Speicherplätze für die Redundanz-Informationen erweitert.

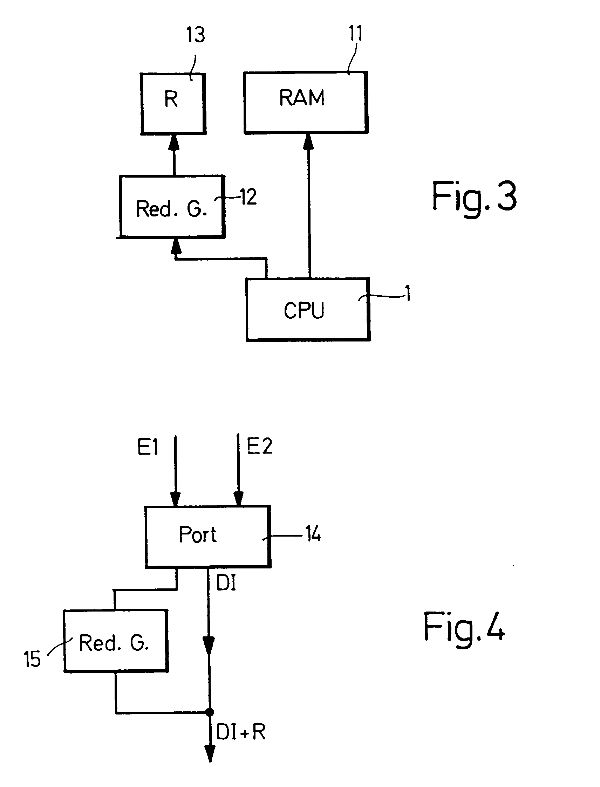

Bei einem schreibenden Zugriff zu einem Schreib-/Lesespeicher 11, siehe Fig. 3, wird mit einem Generator 12, der dem Generator 9 nach Fig. 2 entspricht, eine Prüfinformation erzeugt und in einem Zusatzspeicher 13 - oder zusätzlichen Speicherplätzen im zugehörigen Schreib-/Lesespeicher - abgelegt. Beim lesenden Zugriff auf diese Information wird dann wiederum die Übereinstimmung oder "Plausibilität" überprüft.

Wie Fig. 4 zu entnehmen ist, werden die über eine Eingabeeinheit 14 dem erfindungsgemäßen Mikropozessorsystem zugeführten Daten analog der bereits erläuterten Behandlunsgweise überprüft. Es werden in einem Generator 15 Prüf- bzw. Redundanzinformationen gebildet. Bei Übertragung oder Weiterverarbeitung der Daten erfolgt dann jeweils die Überprüfung in der beschriebenen Weise.

Die Eingabeeinheit 14 erhält die zu verarbeitenden Eingangssignale über doppelt ausgelegte Wege - symbolisiert durch die beiden Eingangspfeile E1, E2 in Fig. 4 - aus der zugehörigen Quelle. Die Prüfredundanz kommt erst nach Erfassung der Signale durch das erfindungsgemäße Mikroprozessorsystem zum Tragen.

Grundsätzlich wird die Anzahl der durch die Redundanzgeneratoren generierten Informationen durch die jeweiligen Forderungen nach Erkennung von Einfach- oder Mehrfachfehlern festgelegt. Ist für einen Anwendungsfall die Erkennung von Einfachfehlern ausreichend, wird der Redundanzgenerator (9,15) am einfachsten durch eine Kette von Exklusiv-ODER-Gattern verwirklicht. Sollen auch Doppelfehler erkennbar sein, so werden mehrere Redundanzbits, z.B. durch Bilden der Quersumme bzw. Addieren aller Bits eines Wortes, gebildet. Die "Größe" der Prüfinformationen läßt sich somit in Abhängigkeit von der geforderten Sicherheit gegen gleichzeitig auftretende Fehler variieren.

Die anhand der Fig. 1 beschriebenen Vergleicher 3,4,5 lassen sich z.B. durch Komparatorschaltungen realisieren, die "bit"-weise alle Informationen vergleichen. Eine mögliche Ausführungsform ist der bit-weise Vergleich durch die vorgenannten Exklusiv-ODER-Gatter, deren Ausgänge durch ein weiteres ODER-Gatter zusammengefaßt werden.

Der Vergleicher 10 nach Fig. 2 vergleicht die aus dem Speicher 7 aus- gelesene Information, die durch die in dem Redundanz- generator 9 erzeugte Redundanzinformation erweitert ist, mit der Prüf-Information aus dem Speicher 8. Diese Über- prüfung geschieht wiederum z.B. mit Hilfe der zuvor ge- nannten Exklusiv-ODER-Gatter.

Die Sicherheit der Fehlererkennung mit Hilfe der erfindungsgemäßen Schaltungsanordnung läßt sich bei Bedarf noch durch folgende Maßnahmen erhöhen: Die Vergleicher und/oder Abschaltpfade können mehrfach ausgelegt werden. Ein "schlafender" Fehler innerhalb eines Vergleichers oder eines Abschaltpfades kann dann eine Systemabschaltung im Fehlerfalle nicht mehr verhindern.

Grundsätzlich ist es auch möglich, einen Vergleicher außerhalb des eigentlichen Mikroprozessorchips anzuordnen. Da ein externer Vergleicher zyklisch Werte aus dem Chip erhält, kann der Vergleicher durch eine zweite Taktversorgung das Zeitverhalten der CPU's überprüfen und im Fehlerfall eine Abschaltung des Regelungssystems hervorrufen. Als Überprüfungskriterien dienen sowohl der Dateninhalt der empfangenen Informationen als auch das zeitliche Verhalten der Signale.

Zur Reduzierung der Übertragungsbandbreite zwischen Vergleicher und den CPU's kann eine zusätzliche Logik verwendet werden, die bestimmte Informationen auswählt und jedes n-te-Resultat zum externen Vergleicher weiterleitet. Durch ein derartiges Auswahlsystem kann die Anzahl der überprüften Stichproben auf ein noch geringeres, noch ausreichendes Maß reduziert werden.

Des weiteren ist es grundsätzlich möglich, lediglich die empfangene Prüf- bzw. Redundanzinformation und die zum Vergleich berechnete Information durch einen externen Schaltkreis zu überprüfen. Die Anzahl der zu dem externen Schaltkreis zu übermittelnden Signale läßt sich auf diese Weise reduzieren.

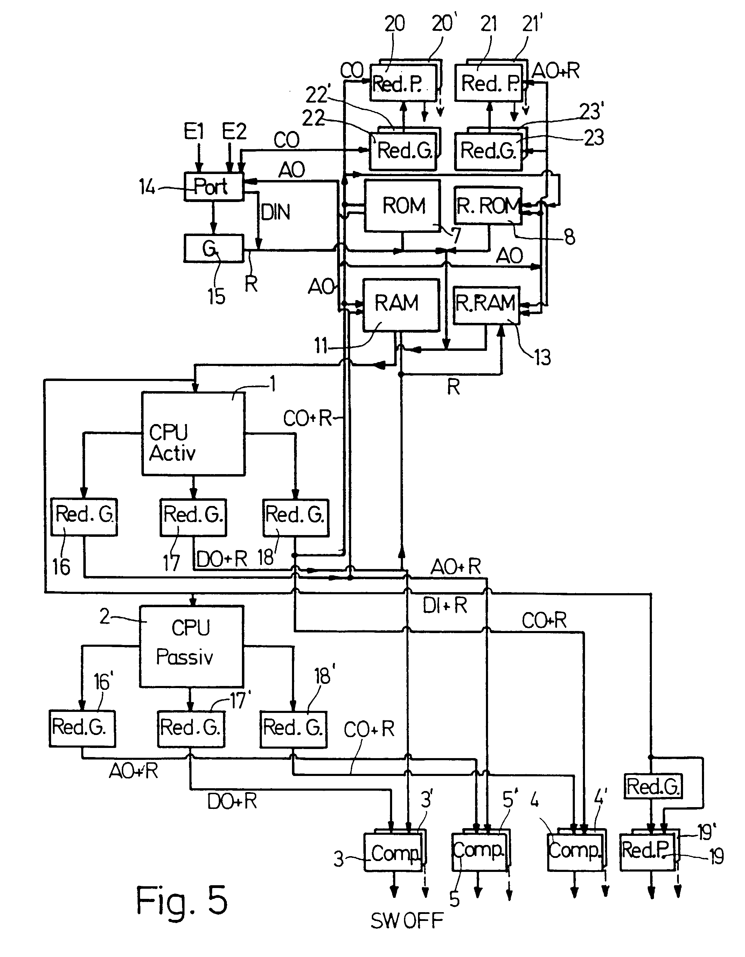

Fig. 5 dient zur Veranschaulichung des Zusammenwirkens der einzelnen bereits beschriebenen oder diskutierten Komponenten eines Mikroprozessorsystems nach der Erfindung. Soweit Übereinstimmung mit den Ausführungsbeispielen nach den Fig. 1 bis 4 besteht, wurden gleiche Bezugszeichen in Fig. 5 verwendet.

Die Ausgangsdaten der Zentraleinheiten 1,2 sind in Fig. 5 mit DO (Data OUT), die Adreßdaten mit AO (Adress OUT) und die Ablaufsteuerungsdaten mit CO (Control OUT) bezeichnet. "R" deutet auf die zugehörige Prüf- bzw. Redundanzinformation hin. Die Eingangsdaten sind mit "I" (DI,AI,CI) bezeichnet.

Abweichend von dem Ausführungsbeispiel nach Fig. 1 werden die Ausgänge der Zentraleinheiten oder CPU's (1,2) über Redundanzgeneratoren 16,17,18 bzw. 16',17',18', die der übertragenen Information eine Prüfinformation, z.B. ein Prüfbit hinzufügen, zu den Vergleichern 3,4,5, weitergeleitet. Wie in Fig. 5 angedeutet ist, sind jeweils zwei Vergleicher 3,3'; 4,4'; 5,5' parallelgeschaltet. Jeder Vergleicher ist in der Lage, ein Fehlererkennungsoder Abschaltsignal (Switch OFF) abzugeben. Zur Überprüfung der Eingangsdaten DI + R ("R" symbolisiert die Prüf- bzw. Redundanzinformation) ist eine weitere Schaltungskomponente 19,19' vorhanden, die ebenfalls ein Abschaltsignal SW OFF erzeugt, wenn die Information und das zugehörige Prüfsignal nicht plausibel sind.

Abweichend von Fig. 1 sind der besseren Übersicht wegen in Fig. 5 die Signaleingänge der Zentraleinheit 1,2 für die Adreß- und Steuerdaten nicht dargestellt, sondern lediglich der Dateneingang DI bzw. DI + R.

Die Anschaltung des Schreib-/Lesespeichers RAM 11 mit dem zugehörigen Speicher 13 für die Prüf- bzw. Redundanzinformation sowie des Festwertspeichers (ROM) 7 und des zugehörigen Prüfspeichers 8 wurden bereits anhand der Fig. 2 und 3 erläutert; es besteht kein Unterschied gegenüber dem Ausführungsbeispiel nach Fig. 5. Die Eingabeeinheit 14 mit dem zugehörigen Redundanzgenerator 15 wurden ebenfalls bereits anhand der Fig. 4 erläutert. Wiederum werden zwei in die Eingangssignale E1,E2 parallel zugeführt.

Zur Überprüfung der Ablaufsteuerungsdaten (Controldaten) und der Adreßdaten sind die Schaltungskomponenten 20,20' und 21,21' vorgesehen, die ebenfalls jeweils zweifach vorhanden sind. Wird in diesen Schaltungskomponenten eine Nicht-Übereinstimmung oder fehlende Plausibilität zwischen den Daten und den zugehörigen Prüfinformationen festgestellt, wird wiederum ein Abschaltsignal SW OFF erzeugt. Die zugehörigen Redundanzgeneratoren sind mit 22,22' und 23,23' beziffert.

## Patentansprüche

1. Schaltungsanordnung für sicherheitskritische Regelungssysteme, mit einem Microprozessorsystem, das zwei oder mehrere Zentraleinheiten bzw. CPU's (1,2) enthält und mit dem durch Datenverarbeitung, die zumindest teilweise redundant ausgelegt ist, die Eingangsdaten ausgewertet und Regelsignale erzeugt werden, wobei die Eingangsdaten parallel verarbeitet werden, Ergebnisse der parallelen, redundanten Datenverarbeitung verglichen und bei Nichtübereinstimmung Signale zur Fehlererkennung bzw. Abschaltung und Sperrung des Regelungssystems gewonnen werden, dadurch **gekennzeichnet,** daß die Zentraleinheiten bzw. CPU's (1,2) mit gemeinsamen Schreib-/Lesespeichern (11), denen jeweils ein Generator (12) zur Erzeugung einer Prüfinformation zugeordnet ist, und mit gemeinsamen Festwertspeichern (7) ausgerüstet sind, wobei die Schreib-/Lesespeicher (11) sowie die Festwertspeicher (7) durch Speicherplätze (13,8) für die Prüfinformation erweitert sind,
daß Ausgangsdaten einer CPU (1,2), nämlich zumindest die Rechenergebnisse bzw. "Daten", mit den entsprechenden Ausgangsdaten der zweiten bzw. der anderen CPU's (2,1) zur Fehlererkennung verglichen werden,
und daß bei jedem schreibenden oder lesenden Zugriff zu den Speichern (11) der Inhalt des Speicherplatzes mit der zugeführten Prüfinformation verglichen bzw. korreliert und ein Fehlererkennungssignal (SW OFF) erzeugt wird, wenn Übereinstimmung oder "Plausibilität" nicht gegeben ist.

2. Schaltungsanordnung nach Anspruch 1, dadurch **gekennzeichnet,** daß sowohl die Rechenergebnisse bzw. "Daten" als auch die Adressen und/oder die Ablaufsteuerungsdaten mit den entsprechenden Ausgangsdaten der zweiten bzw. der anderen CPU's verglichen werden und bei Nicht-Übereinstimmung das Fehlersignal (SW OFF) erzeugt wird.

3. Schaltungsanordnung nach Anspruch 1 oder 2, dadurch **gekennzeichnet,** daß die Prüfinformation in Form von Redundanzinformation (R) vorliegt.

4. Schaltungsanordnung nach einem oder mehreren der Ansprüche 1 bis 3, dadurch **gekennzeichnet,** daß zur Erzeugung der Prüf- bzw. Redundanzinformation (R) die gerade oder ungerade Parität der Bits der einzelnen Daten ermittelt wird.

5. Schaltungsanordnung nach einem oder mehreren der Ansprüche 1 bis 3, dadurch **gekennzeichnet,** daß zur Erzeugung der Prüfinformation die Quersummen der die einzelnen gespeicherten oder übertragenen Daten darstellenden Zahlen oder eine Redundanzinformation auf Basis eines vorgegebenen Polynoms oder Algorithmus gebildet wird.

6. Schaltungsanordnung nach einem oder mehreren der Ansprüche 1 bis 5, dadurch **gekennzeichnet,** daß zur Erzeugung der Prüf- bzw. Redundanzinformation die gespeicherten und/oder die übertragenen Daten durch ein Paritätsbit erweitert werden.

7. Schaltungsanordnung nach einem oder mehreren der Ansprüche 1 bis 6, dadurch**gekennzeichnet,** daß die Eingangsdaten in den CPU's (1,2) synchron verarbeitet werden.

8. Schaltungsanordnung nach einem oder mehreren der Ansprüche 1 bis 7, dadurch **gekennzeichnet,** daß das Fehlererkennungssignal (SW OFF) zur Abschaltung oder Sperrung des Mikroprozessorsystems führt.

9. Schaltungsanordnung nach einem oder mehreren der Ansprüche 1 bis 8, dadurch **gekennzeichnet,** daß zur weiteren Erhöhung der Sicherheit der Fehlererkennung zusätzlich zu den CPU's (1,2) noch weitere Komponenten des Mikroprozessorsystems, wie Festwertspeicher (7), Schreib-/Lesespeicher, Eingang-/Ausgangkomponenten (14), Bussysteme etc., zweifach oder mehrfach vorhanden sind, wobei mit Vergleichern jeweils die Übereinstimmung der Informationen oder die Plausibilität überprüft wird.

10. Schaltungsanordnung nach einem oder mehreren der Ansprüche 1 bis 8,- dadurch **gekennzeichnet,** daß diese Bestandteil einer Kraftfahrzeug-Bremsanlage mit Blockierschutz- und/oder Antriebsschlupfregelung ist und zur Verarbeitung von Signalen, die das Drehverhalten der Fahrzeugräder und/oder das Fahrverhalten des Fahrzeugs wiedergeben, und zum Erzeugen von Bremsdrucksteuersignalen dient.

## Claims

1. Circuit arrangement for use in safety-critical control systems, comprising a microprocessor system which includes two or more central processor units or CPUs (1, 2) and by which input data are evaluated and control signals are generated by data processing that is at least in part redundant, wherein the input data are processed in parallel, and the results of the parallel, redundant data processing are compared and, in the absence of proper correlation, signals are generated for error identification or disconnection and disablement of the control system,
**characterized** in that the central processor units or CPUs (1, 2) include common write/read memories (11) associated with one generator (12) each to produce test information, and common read-only memories (7), wherein the write/read memories (11) and the read-only memories (7) are extended by spaces in memory (13, 8) for the test information,
in that output data of one CPU (1, 2), i.e., at least the calculating results or "data", are compared with the corresponding output data of the second CPU or the other CPUs (2, 1) for error identification,
and in that each writing or reading access to the memories (11) causes comparison or correlation of the contents of the memory space with the supplied test information and generation of an error identification signal (SW OFF) in the absence of correlation or "plausibility".

2. Circuit arrangement as claimed in claim 1,
**characterized** in that the calculating results or "data" and the addresses and/or the sequence control data are compared with the corresponding output data of the second CPU or the other CPUs, and the error signal (SW OFF) is generated upon non-correlation.

3. Circuit arrangement as claimed in claim 1 or 2,
**characterized** in that the test information is provided as redundance information (R).

4. Circuit arrangement as claimed in any one or more of claims 1 to 3,
**characterized** in that the even or odd bit parity of the individual data is determined for generating the test or redundance information (R).

5. Circuit arrangement as claimed in any one or more of claims 1 to 3,
**characterized** in that the sum of digits of the figures representative of the individual stored or transmitted data, or redundance information on the basis of a predetermined polynomial or algorithm is produced for generating the test information.

6. Circuit arrangement as claimed in any one or more of claims 1 to 5,
**characterized** in that the stored and/or transmitted data are extended by a parity bit for generating the test or redundance information.

7. Circuit arrangement as claimed in any one or more of claims 1 to 6,
**characterized** in that the input data in the CPUs (1, 2) are processed synchronously.

8. Circuit arrangement as claimed in any one or more of claims 1 to 7,
**characterized** in that the error identification signal (SW OFF) causes disconnection or disablement of the microprocessor system.

9. Circuit arrangement as claimed in any one or more of claims 1 to 8,
**characterized** in that for further enhancing the reliability in error identification, in addition to the CPUs (1, 2), still further components of the microprocessor system, such as read-only memories (7), write/read memories, input/output components (14), bus systems, etc., are dually or multiply provided, and the information is checked for correlation or plausibility by comparators.

10. Circuit arrangement as claimed in any one or more of claims 1 to 8,
**characterized** in that the circuit arrangement is part of an automotive vehicle brake system with anti-lock and/or traction slip control and serves to process signals representative of the rotational behavior of the vehicle wheels and/or the driving behavior of the vehicle, and to generate braking pressure control signals.

## Revendications

1. Agencement de circuit, pour système de régulation critique en ce qui concerne la sécurité, comprenant un système de microprocesseur qui contient deux unités centrales ou UC (1, 2) ou davantage et au moyen duquel, par un traitement de données qui est prévu au moins partiellement redondant, les données d'entrée sont analysées et des signaux de régulation sont produits, tandis que les données d'entrée sont traitées en parallèle, les résultats des traitements de données redondants parallèles sont comparés et, en cas de non coïncidence, des signaux sont obtenus pour la reconnaissance d'erreur ou la déconnexion et le blocage du système de régulation,
caractérisé en ce que les unités centrales ou UC (1, 2) sont pourvues de mémoires d'écriture/lecture (11) communes, à chacune desquelles est associé un générateur (12) servant à produire une information de contrôle, et de mémoires de valeur fixe (7) communes, les mémoires d'écriture/lecture (11) et les mémoires de valeur fixe (7) étant étendues au moyen d'emplacements de mémoire (13, 8) pour l'information de contrôle,
en ce que des données de sortie d'une UC (1, 2), à savoir au moins les résultats de calcul ou "données", sont comparées aux données de sortie correspondantes de la seconde UC ou des autres UC (2, 1) en vue de la reconnaissance d'erreur,
et en ce que, lors de chaque accès d'écriture ou de lecture aux mémoires (11), le contenu de l'emplacement de mémoire fait l'objet d'une comparaison ou d'une corrélation avec l'information de contrôle envoyée et un signal de reconnaissance d'erreur (SW OFF) est produit lorsqu'une coïncidence ou "plausibilité" n'est pas fournie.

2. Agencement de circuit suivant la revendication 1, caractérisé en ce qu'aussi bien les résultats de calcul ou "données" que les adresses et/ou les données de commande de déroulement sont comparés aux données initiales correspondantes de la seconde UC ou des autres UC et, en cas de non-coïncidence, le signal d'erreur (SW OFF) est produit.

3. Agencement de circuit suivant la revendication 1 ou 2, caractérisé en ce que l'information de contrôle se présente sous forme d'une information de redondance (R).

4. Agencement de circuit suivant une ou plusieurs des revendications 1 à 3, caractérisé en ce que la parité ou l'imparité des bits des données individuelles est déterminée pour la production de l'information de contrôle ou de redondance (R).

5. Agencement de circuit suivant une ou plusieurs des revendications 1 à 3, caractérisé en ce que, pour produire l'information de contrôle, les sommes des chiffres des nombres représentant les données individuelles mises en mémoires ou transmises ou une information de redondance sont formées sur la base d'un polynôme ou algorithme préfixé.

6. Agencement de circuit suivant une ou plusieurs des revendications 1 à 5, caractérisé en ce que, pour produire l'information de contrôle ou de redondance, les données mises en mémoire et/ou les données transmises sont étendues au moyen d'un bit de parité.

7. Agencement de circuit suivant une ou plusieurs des revendications 1 à 6, caractérisé en ce que les données d'entrée sont traitées dans les UC (1, 2) d'une manière synchrone.

8. Agencement de circuit suivant une ou plusieurs des revendications 1 à 7, caractérisé en ce que le signal de reconnaissance d'erreur (SW OFF) entraîne la déconnexion ou le blocage du système de microprocesseur.

9. Agencement de circuit suivant une ou plusieurs des revendications 1 à 8, caractérisé en ce que, pour augmenter encore davantage la sécurité de la reconnaissance d'erreur, il est encore prévu en double exemplaire ou davantage, en sus des UC (1, 2), d'autres composants du système de microprocesseur, tels que mémoires mortes (7), mémoires d'écriture/lecture, composants d'entrées/sorties (14), systèmes de bus, etc., la coïncidence des informations ou la plausibilité étant pour chacun d'eux contrôlée au moyen de comparateurs.

10. Agencement de circuit suivant une ou plusieurs des revendications 1 à 8, caractérisé en ce que celui-ci est une partie constitutive d'un système de freinage pour véhicule automobile à régulation antiblocage et/ou régulation du glissement de traction et sert pour traiter des signaux qui reproduisent le comportement en rotation des roues de véhicule et/ou le comportement de conduite du véhicule et pour produire des signaux de commande de pression de freinage.
